# EUROPEAN PATENT APPLICATION

(11) **EP 3 477 959 A1**
(43) Date of publication of application: **01.05.2019**
(21) Application number: 17199226.6
(22) Date of filing: 30.10.2017
(51) Int. Cl.: H04N 21/442, H04N 21/454, H04N 21/45, H04N 21/475, G06F 21/35, G06F 21/85, G06F 3/01

(54) **ELECTRONIC DEVICE AND METHOD FOR MANAGING DELIVERY OF RESTRICTED CONTENT**

(71) Applicant: Vestel Elektronik Sanayi ve Ticaret A.S., 45030 Manisa (TR)
(72) Inventor: ÖZEL, Ahmet, 45030 Manisa (TR)
(74) Representative: Flint, Adam

(57) **Abstract**

An electronic device (100) manages delivery of restricted content. The restricted content is to be delivered by the electronic device (100). The electronic device (100) is able to connect to wireless access point (104). The electronic device (100) determines if at least one specified user device (118) is wirelessly connected to the wireless access point (104). If a specified user device (118) is detected as being wirelessly connected to the wireless access point (104), the electronic device (100) causes the restricted content to be delivered by the electronic device (100).

## Description

### Technical Field

The present disclosure relates to an electronic device and method for managing delivery of restricted content to be delivered by an electronic device.

### Background

There is an ever present need to control the output of sensitive or inappropriate content from electronic devices in the presence of young children, especially when the children are unattended (i.e. alone, without a parent or guardian present). Known authorisation methods do not allow continued dynamic control over the delivery of restricted content during the delivery of the content.

### Summary

According to a first aspect disclosed herein, there is provided an electronic device arranged to manage delivery of restricted content to be delivered by the electronic device, the electronic device being connectable to a wireless access point, the electronic device being constructed and arranged to:
determine if at least one specified user device is wirelessly connected to a said wireless access point; and
cause the restricted content to be delivered by the electronic device if a specified user device is detected as being wirelessly connected to the wireless access point.

In an example, the electronic device is arranged to determine if at least one specified user device is wirelessly connected to a said wireless access point only if a child is determined to be present in the environment of the electronic device.

In an example, the electronic device comprises a camera for detecting whether a person is present in the environment of the electronic device.

In an example, the camera is rotatable to track movement of a person in the environment of the electronic device.

In an example, the electronic device is arranged to request input of a password to permit the restricted content to be delivered by the electronic device if a specified user device is not connected to the wireless access point.

In an example, the electronic device is a television set.

According to a second aspect disclosed herein, there is provided a method of managing the delivery of restricted content to be delivered by an electronic device, the electronic device being connected to a wireless access point, the method comprising:
determining whether at least one specified user device is wirelessly connected to the wireless access point; and
delivering the restricted content by the electronic device if at least one specified user device is determined as being connected to the wireless access point.

In an example, the method comprises determining if the at least one specified user device is wirelessly connected to the wireless access point only if a child is determined to be present in the environment of the electronic device.

In an example, the method comprises using a camera to detect whether a person is present in the environment of the electronic device.

In an example, the camera is rotatable to track movement of a person in the environment of the electronic device.

In an example, the method comprises requesting input of a password by the electronic device to permit the restricted content to be delivered by the electronic device if a specified user device is not connected to the wireless access point.

In an example, the method is carried out by a television set.

In an example, the wireless access point is a WiFi access point and the determining whether at least one specified user device is wirelessly connected to the wireless access point comprises determining whether the at least one specified user device is wirelessly connected using WiFi

### Brief Description of the Drawings

To assist understanding of the present disclosure and to show how embodiments may be put into effect, reference is made by way of example to the accompanying drawing in which:

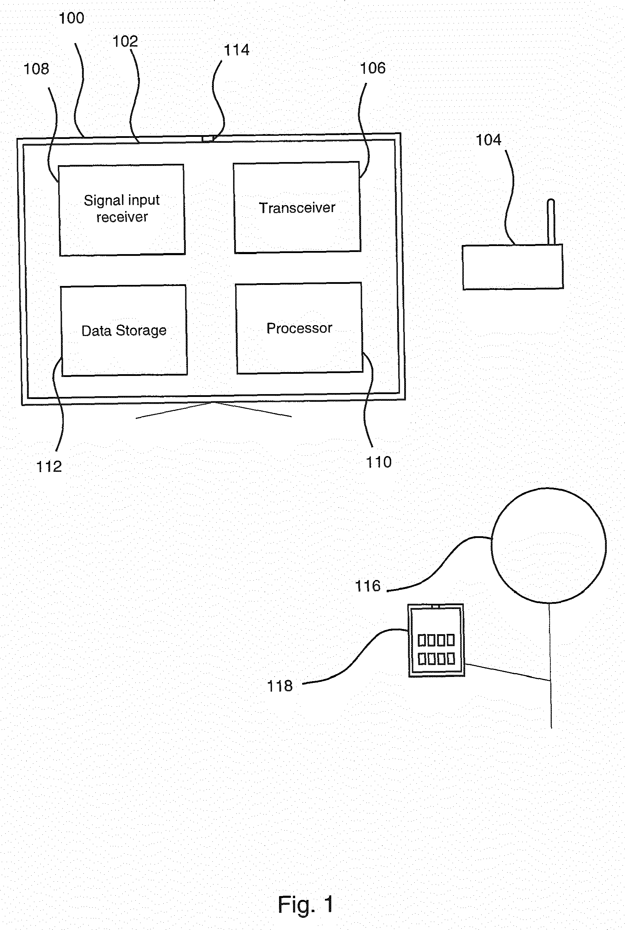

Figure 1 shows schematically an example device arranged to control delivery of restricted content.

### Detailed Description

As mentioned previously, known content authorisation methods do not allow continued control over the delivery of restricted content. For example, a parent or other guardian may wish to continually control the delivery of restricted content to a child even if the parent or other guardian leaves the immediate output area of the device for some reason.

In examples disclosed herein, there is presented an electronic device arranged to manage delivery of restricted content to be delivered by the electronic device. The electronic device is able to connect to a wireless access point. The electronic device determines if at least one specified user device is wirelessly connected to the wireless access point. Subsequently, the electronic device can cause the restricted content to be delivered if a specified user device is detected as being wirelessly connected to the wireless access point and, in a particular example, only if a specified user device is detected as being wirelessly connected to the wireless access point.

Figure 1 shows schematically an example arrangement for managing delivery of restricted content by an electronic device. In this example the electronic device arranged to deliver restricted content is a television set 100. Other examples include personal computers, smartphones, digital radios and other electronic devices which may deliver content to an audience.

The television 100 has a screen 102 for outputting video content. Alternatively or additionally, the television 100 may have or be connected to one or more loudspeakers for outputting audio content.

The television 100 is connected to a wireless access point 104. A wireless access point 104 is a networking element that allows devices to connect wirelessly to each other and/or to a network, which may include a wired network and may or may not include the Internet. The wireless access point 104 can act as a standalone device or be an integral component of a networking device. The television 100 comprises a transceiver 106 for enabling the television 100 to connect to the wireless access point 104. The connection between the transceiver 106 and the wireless access point 104 may be wired and/or wireless.

The television 100 also has a signal input receiver 108 for receiving signals. Such signals may be from another device, such as a remote control device, a microphone and/or a camera. This signal may be transmitted to the television 100 as an infra-red signal (IR signal) for example. Other examples of signals include physical gestures or voice commands.

The television 100 comprises a processor 110. The processor 110 is arranged to process received signals (for example signals received at the signal input receiver 106) and to cause the television 100 to respond accordingly. The television 100 may comprise a data storage 112. The data storage 112 may work in conjunction with the processor 110 for determining when content may be delivered, as discussed further below.

Optionally, the television 100 comprises a camera 114. Examples of usage of the camera 114 will be discussed further below.

In one example, an authorised user 116, such as a parent or guardian, registers a specified user device 118 with the television 100. The data storage 112 of the television 100 comprises a list of specified user devices 118 which are associated with authorised users 116, such as a parent or guardian, of the television 100. Examples of such a specified user device 118 include smartphones, personal computers, smart watches and other electronic devices that are capable of connected to a wireless access point. The parent, etc. provides the list of specified user devices 118 to the television 100 as a preliminary step. This may require the parent to enter a password or the like in the first instance to enable the parent to enter the list, and later to edit the list if necessary to add or remove devices from the list of specified user devices 118.

When an attempt is made to access restricted content at the television 100, the television 100 queries the wireless access point 104 to determine whether a specified user device 118 is connected to the wireless access point 104. Examples of restricted content may be radio programmes, films (movies) or television programmes. As another example, the restricted content may be the entire content output by certain channels such that the whole channel may be regarded as (providing) restricted content. If the specified user device 118 is determined as being connected to the wireless access point 104, the television 100 displays the restricted content. This avoids the parent 116 having to enter a password or the like each time the restricted content is to be viewed. Moreover, if for example a child user attempts to access the restricted content at the television 100, access to the content is not permitted unless a specified user device 118 is connected to the wireless access point 104. This prevents the child being able to avoid the content restriction by for example attempting to enter a password as might be used in known systems.

A further advantage of this is that an authorised user 116 such as a parent is able to control the delivery of restricted content by the television 100 even when they are not in the environment either by connecting the specified user device 118 to the wireless access point 104 or disconnecting the specified user device 118 from the wireless access point 104 as needed at any particular point in time. If the specified user device 118 is not currently connected to the wireless access point 104, restricted content is not permitted to be delivered by the television 100. In this example, even if another adult user or other guardian (such as a child minder) is present in the viewing environment, the restricted content is not delivered by the television 100.

As a variant of this example, the television 100 may comprise additional security features to better enforce parental guidance upon the restricted content. In one example, the camera 114 is used for determining whether only a child is or children are present in the environment in which the restricted content is to be delivered. (Image recognition techniques for identifying a person as being a child are known.) If only a child is or children are present in the viewing environment of the television 100, i.e. an adult is not detected by the camera 114, the television 100 may be arranged then to determine if the specified user device 118 is connected to a wireless connection point 104 as described above. The parent 116 may wish to authorise delivery of the material without the parent 116 being present in the viewing environment (for example, because the parent 116 may temporarily have left the viewing environment but is happy for the child to view the content) by connecting the specified user device 118 to the wireless access point 118. Subsequently, the television 100 delivers the restricted content to the child/children.

In another example, if a specified user device 118 is not connected to the wireless access point 104, the television 100 may request a password to allow the restricted content to be displayed. The television 100 may allow the restricted content to be displayed if the correct password is entered even when a specified user device 118 is not connected to the wireless access point 104. If the password is incorrect, the television 100 may not deliver the restricted content. Alternatively or additionally, if the password is incorrect the television 100 may extract a programme or entire channel from display.

In another aspect, a camera may in some instances be used as the primary authorisation element of an electronic device such as the television 100 for the delivery of restricted content to child users. When a child user wishes to view restricted content at the television 100, the camera 114 may be arranged to detect presence of an adult 116.

In an example of this, the camera 114 of the television 100 is rotatable to track and follow movement of an adult, etc. 116 in a viewing environment. If the camera 114 tracks movement of the adult 116 and adult 116 is detected as having moved and been absent from the environment for longer than a threshold period of time, the television 100 may determine that the adult has left the environment. If it is determined that the adult 116 has left the environment, the television 100 may be arranged to stop the delivery of the restricted content to any children present in the environment. Additionally, the television 100 may be arranged to recommence delivery of the restricted content once the adult 116 is detected by the camera 114 as moved back into and therefore having returned to the environment.

The television 100 may be arranged to detect that any adult 116, i.e. not necessarily the initially detected adult 116, has returned to the environment. Alternatively a specific authorised adult may pre-register as the authorised adult 116 at the television 100. The authorised 116 adult may be the only user able to control the delivery of restricted content. In one example, the authorised adult may be recognised by the camera 114 by face recognition.

In another example, the television 100 may have stored commands or instructions corresponding to pre-defined gestures. A rotatable camera 114 is arranged track and follow movement of an adult, etc. 116 and to detect gestures performed by an adult 116 in the viewing environment of the television. If the television 100 determines movement of the adult 116 and recognises the gesture by the adult 116, the associated command/instruction is carried out. For example, the adult 116 may hold up their right hand at the television 100. This gesture may instruct the television 100 to pause the content currently being delivered as the adult 116 will be leaving the environment. Additionally, the rotatable camera 114 may be arranged to detect a gesture signalling that the user has returned to the environment, the gesture corresponding to continuing to output the paused restricted content.

In a variation of the above example, an adult may perform a gesture that instructs the television 100 to continue to deliver the restricted content even when they leave the environment. This will allow for an undisturbed viewing experience for the child, with the permission of an adult.

Accordingly, in other aspects described herein, there is provided an electronic device arranged to manage delivery of restricted content to be delivered by the electronic device, the electronic device comprising a rotatable camera for monitoring and tracking movement of users in the environment, the electronic device being arranged to cause restricted content to be delivered by the electronic device if an authorised user is detected as being present in an environment.

In an example, the electronic device is arranged to request input of a password to permit the restricted content to be delivered by the electronic device if an authorised user is not detected in the environment.

In an example, the electronic device is arranged to determine whether the authorised user is not detected by the rotatable camera for a pre-defined minimum period of time, the electronic device being arranged to stop delivering the restricted content if the authorised user is not detected by the rotatable camera for longer than the pre-defined minimum period of time.

In an example, the electronic device is arranged to determine whether the authorised user has performed a pre-defined gesture, wherein if a pre-defined gesture has been recognised by the television, the electronic device is arranged to follow a pre-defined set of instructions associated with the pre-defined gesture.

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electronic device (100) arranged to manage delivery of restricted content to be delivered by the electronic device (100), the electronic device (100) being connectable to a wireless access point (104), the electronic device (100) being constructed and arranged to:
determine if at least one specified user device (118) is wirelessly connected to a said wireless access point (104); and
cause the restricted content to be delivered by the electronic device (100) if a specified user device (118) is detected as being wirelessly connected to the wireless access point (104).

2. An electronic device (100) according to claim 1, the electronic device (100) being arranged to determine if at least one specified user device (118) is wirelessly connected to a said wireless access point (104) only if a child (202) is determined to be present in the environment of the electronic device (100).

3. An electronic device (100) according to claim 1 or claim 2, comprising a camera (114) for detecting whether a person is present in the environment of the electronic device (100).

4. An electronic device (100) according to claim 3, wherein the camera (114) is rotatable to track movement of a person in the environment of the electronic device (100).

5. An electronic device (100) according to any of claims 1 to 4, the electronic device (100) being arranged to request input of a password to permit the restricted content to be delivered by the electronic device (100) if a specified user device (118) is not connected to the wireless access point (104).

6. An electronic device (100) according to any of claims 1 to 5, wherein the electronic device (100) is a television set.

7. A method of managing the delivery of restricted content to be delivered by an electronic device (100), the electronic device (100) being connected to a wireless access point (104), the method comprising:
determining whether at least one specified user device (118) is wirelessly connected to the wireless access point (104); and
delivering the restricted content by the electronic device (100) if at least one specified user device (118) is determined as being connected to the wireless access point (104).

8. A method according to claim 7, comprising determining if the at least one specified user device (118) is wirelessly connected to the wireless access point (104) only if a child (202) is determined to be present in the environment of the electronic device (100).

9. A method according to claim 7 or claim 8, comprising using a camera (114) to detect whether a person is present in the environment of the electronic device (100).

10. A method according to claim 9, wherein the camera (114) is rotatable to track movement of a person in the environment of the electronic device (100).

11. A method according to any of claims 7 to 10, comprising requesting input of a password by the electronic device (100) to permit the restricted content to be delivered by the electronic device (100) if a specified user device (118) is not connected to the wireless access point (104).

12. A method according to any of claims 7 to 11, carried out by a television set.

13. A method according to any of claims 7 to 12, wherein the wireless access point (104) is a WiFi access point and the determining whether at least one specified user device (118) is wirelessly connected to the wireless access point (104) comprises determining whether the at least one specified user device (118) is wirelessly connected using WiFi.
